# EUROPÄISCHE PATENTSCHRIFT

(11) **EP 1 276 597 B1**
(45) Veröffentlichungstag und Bekanntmachung des Hinweises auf die Patenterteilung: **08.09.2004**
(21) Anmeldenummer: 00936528.9
(22) Anmeldetag: 02.06.2000
(51) Int. Cl.: B29B 17/00, B29C 47/10, B02C 18/44

(54) **VORRICHTUNG UND VERFAHREN ZUM AUFBEREITEN VON THERMOPLASTISCHEM KUNSTSTOFFGUT**
DEVICE AND METHOD FOR PROCESSING THERMOPLASTIC SYNTHETIC MATERIAL
DISPOSITIF ET PROCEDE DE TRAITEMENT DE MATIERE SYNTHETIQUE THERMOPLASTIQUE

(30) Priorität: 26.04.2000 AT 7292000
(43) Veröffentlichungstag der Anmeldung: 22.01.2003
(73) Patentinhaber: Bacher, Helmut, 4490 St. Florian (AT); Schulz, Helmuth, 4020 Linz (AT); Wendelin, Georg, 4033 Linz (AT)
(72) Erfinder: Bacher, Helmut, 4490 St. Florian (AT); Schulz, Helmuth, 4020 Linz (AT); Wendelin, Georg, 4033 Linz (AT)
(74) Vertreter: Wildhack, Helmut, Dipl.-Ing. Dr.
(86) Internationale Anmeldenummer: PCT/AT2000/000157
(87) Internationale Veröffentlichungsnummer: WO 2001/081058

(56) Entgegenhaltungen:
- WO-A-89/07042
- WO-A-93/18902
- WO-A-98/16360
- GB-A- 970 822
- US-A- 4 139 309
- US-A- 5 783 225

## Beschreibung

Die Erfindung bezieht sich auf eine Vorrichtung zum Aufbereiten von thermoplastischem Kunststoffgut, insbesondere zu Recyclingzwecken, mit einem Schneidraum, in dessen Bodenbereich ein Zerkleinerer angeordnet ist, der zumindest einen um eine horizontale Achse umlaufenden Rotor aufweist, der an seinem Umfang das aufzubereitende Gut zerkleinemde Werkzeuge, insbesondere Messer, trägt, denen ortsfeste Widerlager, insbesondere Gegenmesser, zugeordnet sind, und mit zumindest einem das Kunststoffgut im Schneidraum gegen den Zerkleinerer drückenden Druckwerkzeug, insbesondere einem im Bereich des Bodens des Schneidraumes angeordneten Stopfschieber, und mit einer das im Schneidraum zerkleinerte Kunststoffgut abtransportierenden, in einem Gehäuse gelagerten Schnecke, insbesondere einer Extruderschnecke.

Weiters bezieht sich die Erfindung auf ein Verfahren zum Aufbereiten von thermoplastischem Kunststoffgut.

Eine derartige Vorrichtung ist bekannt (WO 98/16360). Die dort beschriebene Konstruktion hat den Nachteil, dass das vom Zerkleinerer bearbeitete Schüttgut inhomogen in die Extruderschnecke gelangt, insbesondere, wenn das zu verarbeitende Material feucht ist, was gerade bei Recydinggut zumeist nicht zu vermeiden ist Die in die Extruderschnecke gelangte Feuchtigkeit bewirkt eine Abkühlung des von der Schnecke transportierten Gutes und die Entwicklung von Dampfblasen, was Störungen im Betrieb und insbesondere eine schlechte Qualität des am Extruderausgang erhaltenen Produktes zur Folge hat da verhältnismäßig kalte Materialteilchen unter Umständen nicht oder nicht völlig aufgeschmolzen werden.

Eine weitere Vorrichtung und ein Verfahren zum Behandeln von thermoplastischen kunststoff sind aus dem Dokument WO-A-93/18902 bekannt.

Die Erfindung setzt sich zur Aufgabe, diese Nachteile zu vermeiden und eine Vorrichtung der eingangs geschilderten Art so zu verbessern, dass die Vorrichtung wesentlich unempfindlicher wird auf im zu verarbeitenden Gut enthaltene Feuchtigkeit und auch unempfindlich gegenüber Schwankungen dieser Feuchtigkeit, sodass das am Ausgang der Schnecke erhaltene Produkt qualitätsmäßig wesentlich verbessert wird. Die, Erfindung löst diese Aufgabe mit der Vorrichtung gemäß dem Anpruch 1 und mit dem Verfahren gemäß dem Anspruch 19. Die erfindungsgemäße Anordnung des Mischraumes löst die geschilderten Probleme, denn im Mischraum werden thermisch und bezüglich der Feuchte inhomogene Teilchen temperaturmäßig und feuchtigkeitsmäßig ausgeglichen, da sich ja für die vom Zerkleinerer angelieferten Gutteilchen eine mittlere Verweilzeit im Mischraum einstellt, welche wesentlich zur Homogenisierung der Teilchen beiträgt. Je homogener die Teilchen im Mischraum werden, desto weniger muss die Schnecke diese Inhomogenitäten vergleichmäßigen, sodass ein kaltes und daher nicht aufgeschmolzenes bzw. feuchtes Gutteilchen nicht zum Schneckenausgang gelangen kann und daher das sogenannte "Pumpen" der Schnecke vermieden wird.

Die von den umlaufenden Mischorganen in das Gut im Mischraum eingebrachte Energie unterstützt aber auch die Arbeit der Schnecke, da sich eine Erhöhung der durchschnittlichen Teilchentemperatur im Mischraum einstellt und die Schnecke entsprechend weniger Arbeit leisten muss, um die gewünschte Verarbeitungstemperatur (zumeist die Plastifiziertemperatur) des verarbeiteten Gutes zu erreichen, Ist eine solche Temperaturanhebung im Mischraum nicht erwünscht, so kann dies durch eine Kühlung des Mischraumes erreicht werden, ebenso wie es möglich ist, durch eine Beheizung des Mischraumes mehr Energie in das in ihm umlaufenden Mischgut einzubringen. Eine Messung und Steuerung der Temperatur des im Mischraum befindlichen Gutes bereitet keine Schwierigkeit und es kann diese Temperatur auch durch Änderung der Drehzahl der umlaufenden Mischorgane und/oder durch Änderung der Füllmenge beeinflusst werden.

Der Zerkleinerer hat in der Regel nur einen einzigen Rotor, jedoch sind im Rahmen der Erfindung auch Zerkleinerer mit zwei oder mehr Rotoren einsetzbar.

Für die Anordnung des Mischraumes relativ zum Schneidraum bieten sich im Rahmen der Erfindung zahlreiche Möglichkeiten an. So kann das vom Zerkleinerer bearbeitete Gut beispielsweise über eine Rutsche in den Mischraum gelangen, welcher zweckmäßig nahe dem Einzugsende der Schnecke anzuordnen ist, um die Bewegungsenergie des im Mischraum befindlichen Gutes für die Befütterung der Schnecke bzw. des ihr benachbarten Rotorendes ausnutzen zu können. Eine günstigere Ausführungsform besteht im Rahmen der Erfindung aber darin, dass der Mischraum unmittelbar an den Schneidraum anschließt. Dadurch liefert der Rotor oder die Rotoren des Zerkleinerers das bearbeitete Gut ohne Umwege und Ober die gesamte Rotortänge durch die Öffnung in den Mischraum ein, was ebenfalls zur Homogenisierung des bearbeiteten Gutes beiträgt Vorzugsweise ist der Mischraum an der dem Druckwerkzeug gegenüberliegenden Seite eines Einwellen-Zerkleinerers angeordnet, was in der Regel eine Nebeneinanderanordnung des Schneidraumes und des Mischraumes zur Folge hat. Dies ist konstruktiv günstiger als eine Übereinanderanordnung, obwohl auch eine solche möglich wäre, insbesondere dann, wenn ein Ein- oder Zweiwellen-Zerklelnerer das von ihm bearbeitete Gut, gegebenenfalls Ober ein Sieb, nach unten in den Mischraum fallen lässt. Eine solche Konstruktion würde jedoch in der Regel bedingen, dass die Schnecke im wesentlichen auf der Höhe des Mischraumes anzuordnen wäre. Günstiger ist es Jedoch im Rahmen der Erfindung, wenn die Schnecke koaxial zur Achse des Einwellen-Zerkfelnerers angeordnet und mit diesem drehschlüssig gekoppelt ist. Dies hat den Vorteil, dass nur ein einziger, den wesentlichen Energieverbraucher darstellender Hauptantrieb für den Zerkleinerer und die, Schnecke erforderlich ist, denn zumeist erfordert der Antrieb der Mischorgane wesentlich weniger Energie als der Antrieb des Zerkleinerers und der Schnecke.

Bezüglich der Anordnung der Mischorgane im Mischraum bietet die Erfindung ebenfalls eine große Variationsbreite: So besteht eine besonders günstige Ausführungsform darin, dass im Mischraum zumindest ein Mischorgan um eine vertikale oder leicht geneigte Achse umläuft, wobei die Umlaufrichtung so gewählt ist, dass die Zentrifugalkraft das umlaufende Kunststoffgut am der Schnecke benachbarten Ende des Mischraumes gegen den Zerkleinerer und/oder in eine zur Schnecke führende Auslassöffnung des Mischraumes drückt. Eine andere günstige Ausführungsvariante besteht darin, dass im Mischraum zumindest ein Mischorgan um eine zur Achse des Zerkleinerers parallele oder dazu leicht geneigte Achse umläuft, wobei diese Umlaufrichtung vorzugsweise der Umlaufrichtung des Rotors des Zerkleinerers entgegengesetzt gerichtet ist. Bei beiden Varianten ergibt sich eine günstige Einführung des Kunststoffgutes aus dem Mischraum in die Einzugsöffnung der Schnecke.

Das erfindungsgemäße Verfahren zum Aufbereiten von thermoplastischem Kunststoffgut, insbesondere zu Recyclingzwecken, geht aus von einer Vorgangsweise, bei weicher das Kunststoffgut von einem, zumindest einen mit Zerkleinerungswerkzeugen bestückten, zur Drehbewegung um seine Achse angetriebenen Rotor aufweisenden, Zerkleinerer in einem Schneidraum zerkleinert und in der Folge mittels einer Schnecke abtransportiert wird. Das erfindungsgemäße Verfahren ist durch die kombination der Merkmale des Anspruchs 19 definiert. Diese bedeutet eine wesentliche Verbesserung der am Ausgang der Schnecke erhaltenen Gutqualität und auch eine Erleichterung der Arbeit der Schnecke. Die Homogenisierung der Kunststoffgutteilchen kann hinsichtlich ihrer Temperatur und/oder der Feuchtigkeit und/oder der Größenverteilung erfolgen. Besonders günstig ist es, wenn gemäß einer Weiterbildung des erfindungsgemäßen Verfahrens die zerkleinerten Teilchen im Mischraum auch getrocknet werden, da auf diese Weise die eingangs geschilderten, durch feuchte Teilchen hervorgerufenen Probleme vermieden werden. Die Trocknung kann allein durch die zur Mischung bzw. Zerkleinerung aufgebrachte Energie erfolgen und bzw. oder durch zusätzliche Aufbringung äußerer Energie mittels einer Beheizung des Mischraumes.

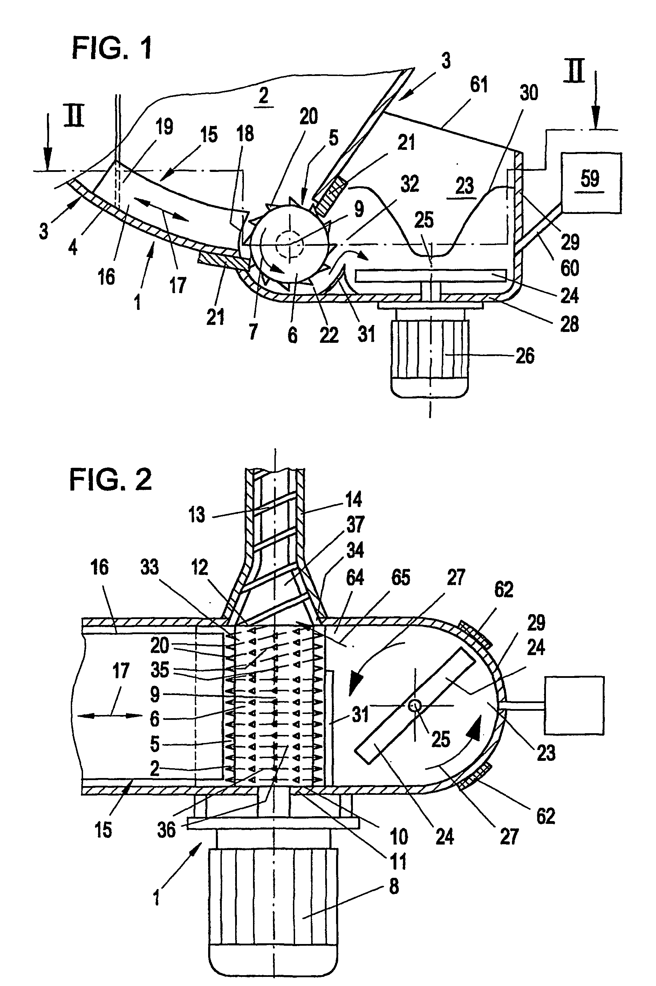

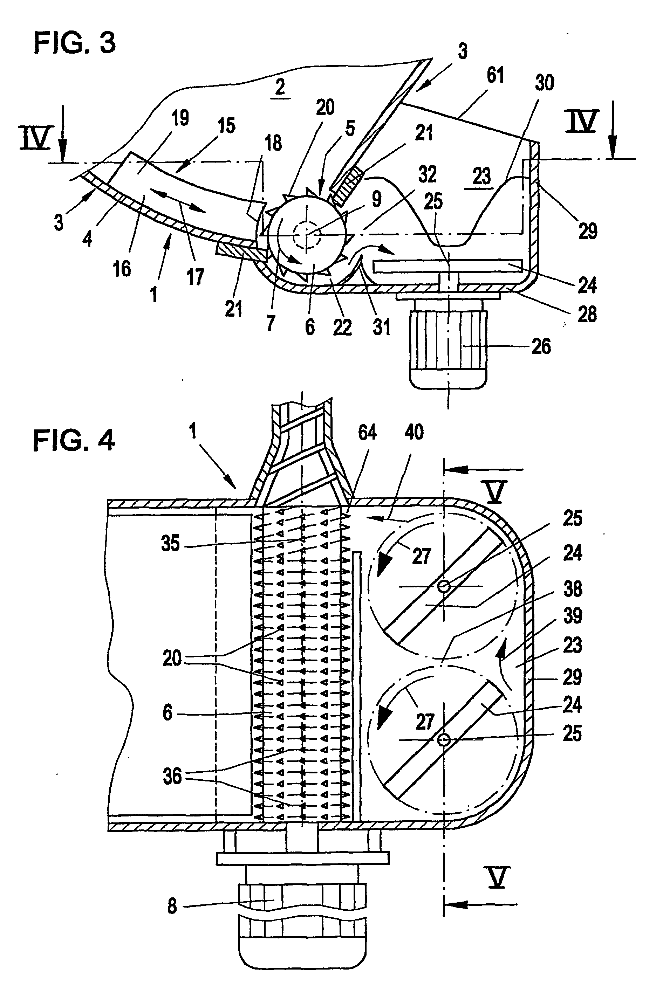

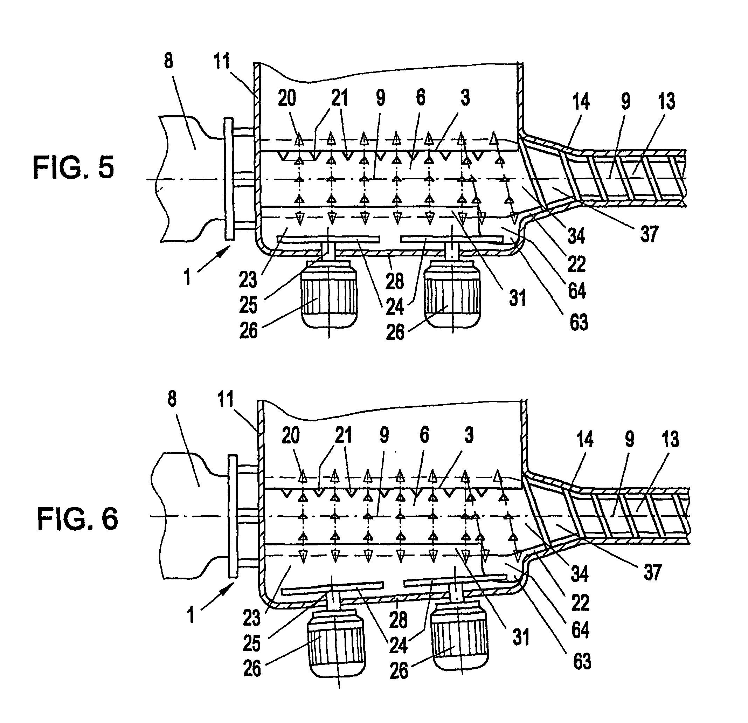

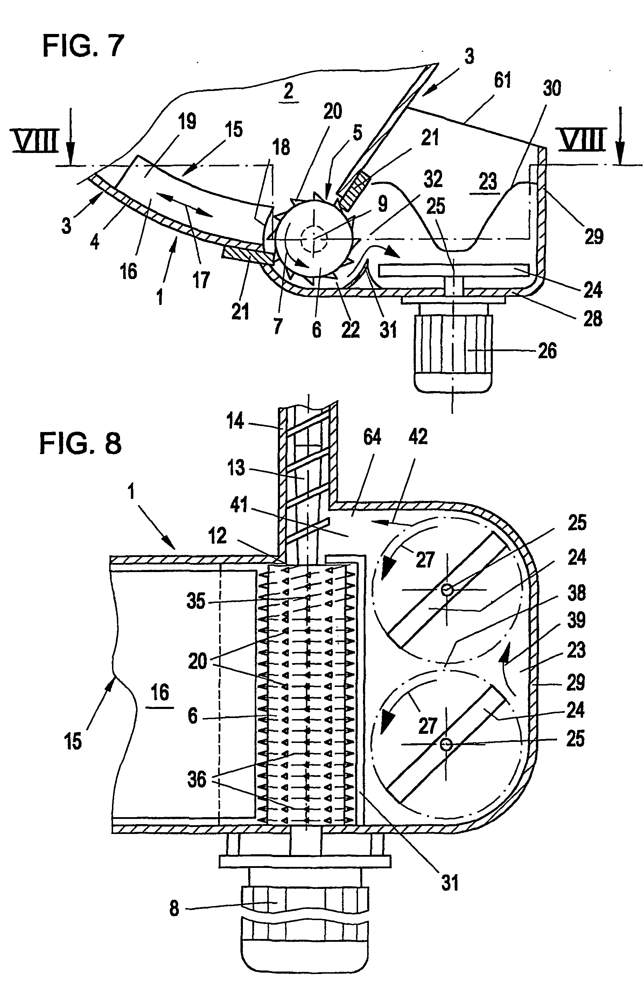

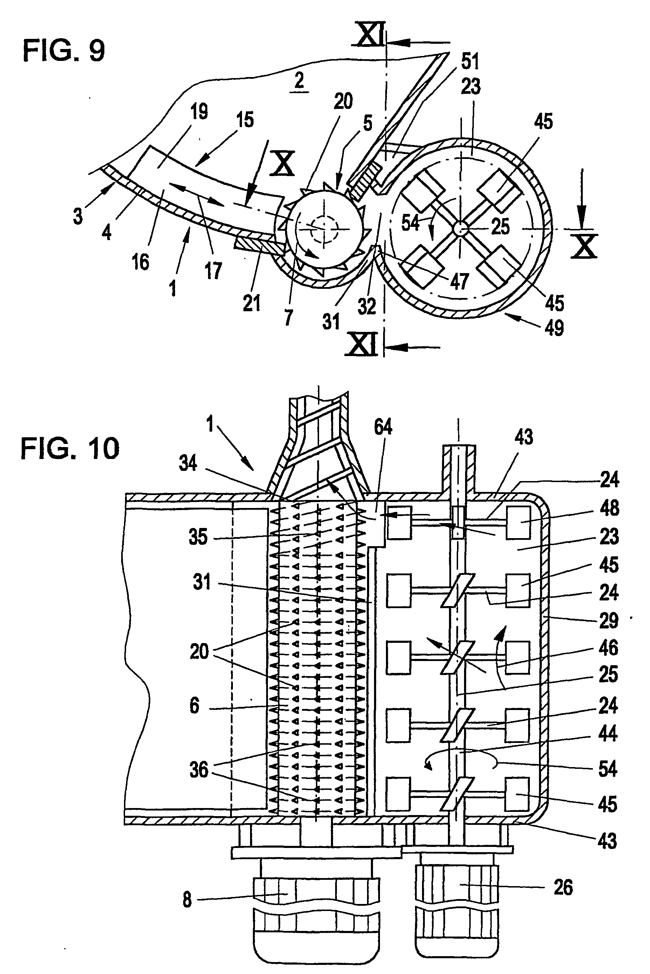

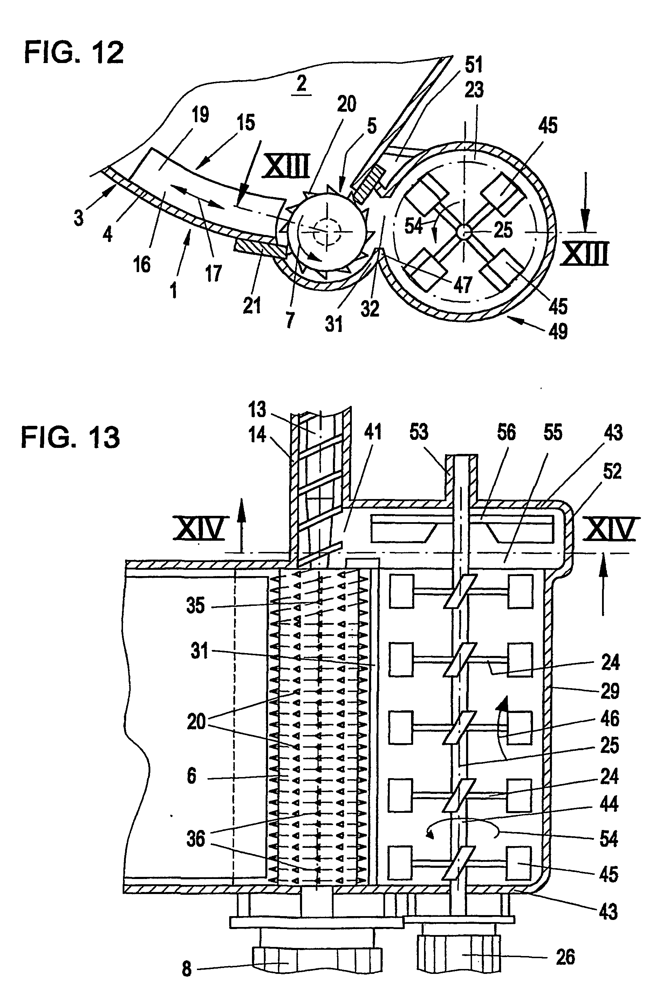

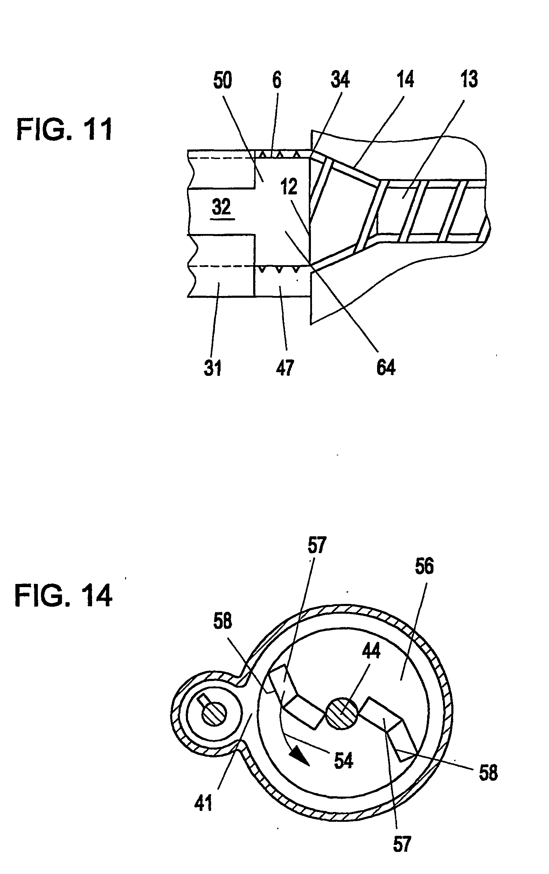

Weitere Kennzeichen und Vorteile der Erfindung ergeben sich aus den Unteransprüchen und aus der Beschreibung von Ausführungsbeispielen des Erfindungsgegenstandes, welche in der Zeichnung schematisch dargestellt sind. Fig. 1 zeigt eine erste Ausführungsform im Vertikalschnitt. Fig. 2 ist ein Schnitt nach der Linie II - II der Fig. 1. Fig. 3 zeigt eine zweite Ausführungsform im Vertikalschnitt, wobei Fig. 4 ein Schnitt nach der Linie IV - IV der Fig. 3 ist. Fig. 5 zeigt im Schnitt eine Variante zur Ausbildung nach den Fig. 3 und 4. Fig. 6 zeigt eine Ausführungsvariante zur Ausführungsform nach Fig. 5. Fig. 7 zeigt eine weitere Ausführungsform im Vertikalschnitt und Fig. 8 ist ein Schnitt nach der Linie VIII - VIII der Fig. 7. Fig. 9 zeigt eine weitere Ausführungsform im Vertikalschnitt. Fig. 10 ist ein Schnitt nach der Linie X- X der Fig. 9. Fig. 11 ist ein Schnitt nach der Linie XI - XI der Fig. 9 durch ein Detail. Fig. 12 zeigt eine weitere Ausführungsform im Vertikalschnitt. Fig. 13 ist ein Schnitt nach der Linie XIII - XIII der Fig. 12 und Fig. 14 ist ein Schnitt nach der Linie XIV - XIV der Fig. 13.

Bei der Ausführungsform nach den Fig. 1 und 2 hat die Vorrichtung ein Gestell 1, in welchem ein Schneidraum 2 vorgesehen ist, der seitlich von Wänden eines Trichters 3 begrenzt ist, in welchen das zu bearbeitende thermoplastische Kunststoffgut, zumeist Recyclingware, z. B. Flaschen, Folienreste, Fasern, Kunststoffbehälter, Verpackungsreste usw., von oben eingebracht wird. Oberhalb des gekrümmten Bodens 4 des Schneidraumes 2 ist ein Zerkleinerer 5 angeordnet, der zweckmäßig als Einwellen-Zerkleinerer mit einem Rotor 6 ausgebildet ist, gegebenenfalls aber auch zwei oder mehr Rotoren aufweisen kann. Der Rotor 6 wird in Richtung des Pfeiles 7 von einem Motor 8 (Fig. 2) zum Umlauf um seine horizontale Achse 9 angetrieben und ist hiezu an seinem einen Stimende 10 in einer Seitenwand 11 des Schneidraumes 2 gelagert. Das andere Stimende 12 des Rotors 6 ist drehschlüssig mit einer Schnecke 13 verbunden, die in ihrem Gehäuse 14 drehbar gelagert ist, wobei diese Lagerung zugleich auch den Rotor 6 lagert. Das in den Schneidraum 2 eingefüllte, zu bearbeitende Gut wird durch ein Druckwerkzeug 15 gegen den Rotor 6 gedrückt Zweckmäßig ist dieses Druckwerkzeug 15 ein Stopfschieber 16, der durch einen nicht dargestellten Antrieb in Richtung des Doppelpfeiles 17 hin- und herbewegt wird. Die Bodenfläche des Stopfschiebers 16 folgt in ihrer Krümmung zweckmäßig der Krümmung des Bodens 4 des Schneidraumes 2. Die dem Rotor 6 zugewendete Stirnfläche 18 des Stopfschiebers 16 folgt in ihrer Krümmung zweckmäßig der Krümmung des Rotors 6. Der Stopfschieber 16 kann durch eine Öffnung 19 des Trichters 3 nach außen geführt und von außen angetrieben sein.

Der Rotor 6 trägt an seinem Umfang das aufzubereitende Gut zerkleinernde Werkzeuge in Form von Messern 20, denen ortsfeste Widerlager in Form von Gegenmessem 21 im Gestell 1 zugeordnet sind. Zweckmäßig passieren die Messer 20 die Gegenmesser 21 unter Bildung schmaler Scherspalte, um das zu bearbeitende Gut möglichst gut zu zerkleinern. Zumindest ein Großteil des so zerkleinerten Gutes passiert einen bogenförmigen Spalt 22 zwischen Rotor 6 und dem Boden 4 des Schneidraumes 2 und wird durch Fliehkraftwirkung in einen dem Schneidraum 2 benachbarten Mischraum 23 eingeworfen, der mit dem Schneidraum 2 über eine Öffnung 32 des Gestelles 1 unmittelbar in Verbindung steht, wobei das Gestell 1 den Mischraum 23 bzw. den Schneidraum 2 begrenzt. Gegebenenfalls gelangt ein geringerer Anteil des vom Rotor 6 zerkleinerten Gutes direkt in das Gehäuse 14 der Schnecke 13. Im Mischraum 23 sind Mischorgane 24 angeordnet, die um eine vertikale Achse 25 in Richtung des Pfeiles 27 umlaufen und hiefür von einem Motor 26 angetrieben sind. Diese Mischorgane 24 sind im Bereich des Bodens 28 des Mischraumes 23 angeordnet, der zweckmäßig auf derselben Höhe liegt wie der unterste Abschnitt des Bodens 4 des Schneidraumes 2. Die Mischorgane 24 können von quer zur Achse 25 verlaufenden Stangen gebildet sein, aber auch jede andere geeignete Gestalt aufweisen, z.B. die Form von Schaufeln. Die umlaufenden Mischorgane 24 erteilen dem in den Mischraum 23 vom Rotor 6 eingebrachten Gut eine Umlaufbewegung um die Achse 25, wobei das Gut entlang der Seitenwand 29 des Mischraumes 23 in Form einer Mischtrombe 30 hochsteigt und nach Erreichen einer Maximalhöhe nach innen in den Zentralbereich des Mischraumes 23 wieder zurückfällt. Dadurch wird das Gut zusätzlich zur Mischung bearbeitet, insbesondere hinsichtlich der Temperatur, der Feuchte, der Größenverteilung etc. homogenisiert. Um zu vermeiden, dass die umlaufenden Mischorgane 24 das Gut im Bodenbereich des Mischraumes 23 wieder zurück in den Spalt 22 fördern, ist zwischen dem Rotor 6 und dem Mischraum 23 eine die Öffnung 32 begrenzende Rippe 31 angeordnet, die parallel zur Achse 9 des Rotors 6 über den Großteil seiner Länge verläuft, jedoch im Abstand vom Stimende 12 des Rotors 6 endet, sodass dort die Öffnung 32, über welche der Schneidraum 2 mit dem Mischraum 23 in Verbindung steht, nach unten eine Vergrößerung 64 erhält und damit für den Durchtritt des im Mischraum 23 umlaufenden Gutes wirksamer gemacht wird. Die Rippe 31 kann von einem gebogenen Blech gebildet sein, aber auch als Gehäusezwickel, wie dargestellt. Wie ersichtlich, ist die Umlaufrichtung (Pfeil 27) der Mischorgane 24 im Mischraum 23 so gewählt, dass die Zentrifugalkraft das umlaufende Gut in Richtung der Pfeile 65 in diese vergrößerte Öffnung 64 drückt, wobei die Richtung, in welcher das Material in diese Öffnung 64 gelangt, gleichsam tangential an den Umlauf des Gutes im Mischraum 23 anschließt. Das so aus dem Mischraum 23 herausgeschleuderte Gut gelangt teils direkt in die Einzugsöffnung 34 der Schnecke 13, teils auf den Umfang jenes Abschnittes 33 des Rotors 6, welcher der Schnecke 13 benachbart ist. Das nachdrückende Gut fördert auch diese Gutteilchen in die Einzugsöffnung 34. Dies kann dadurch unterstützt werden, dass zumindest im Abschnitt 33 des Rotors 6 die Messer 20 entlang Schraubenlinien 35 (Fig. 2) am Rotormantel angeordnet und so schräg zur Achse 9 gestellt sind, dass die Messer 20 das Gut in Richtung zur Schnecke 13 drücken. Im Restteil des Rotors 6 sind jedoch die Messer 20 zweckmäßig entlang normal zur Achse 9 liegender Kreise 36 angeordnet.

Die Mischung des Gutes im Mischraum 23 vor dem Einzug des Gutes in das Schneckengehäuse 14 bewirkt eine Erhöhung der durchschnittlichen Verweilzeit der Kunststoffteilchen im Mischraum und daher eine Homogenisierung der Teilchentemperatur und der Feuchte sowie als Folge der Energieeinbringung eine Trocknung des Gutes. Weiters ergibt sich durch die aufgewendete Mischenergie eine Erhöhung der Teilchentemperatur, was eine Entlastung für die Schnecke 13 zur Erreichung der Pastifiziertemperatur bedeutet und eine schonendere Verarbeitung des behandelten Gutes.

Um den Einzug des bearbeiteten Gutes in das Gehäuse 14 der Schnecke 13 zu begünstigen, kann das dem Rotor 6 zugewendete Stimende der Schnecke 13 einen sich konisch verbreiternden Kern 37 aufweisen, was eine Vergrößerung der Einzugsöffnung 34 zur Folge hat.

Bei der Ausführungsform nach den Fig. 3, 4 und 5 ist der Rotor 6 im Verhältnis zu seinem Durchmesser länger ausgebildet als bei der Ausführungsform nach den Fig. 1 und 2. Bei Anordnung eines einzigen umlaufenden Mischorganes 24 im Mischraum 23 würde sich dadurch eine sehr große Abmessung des Mischraumes 23, gemessen normal zur Achse 9, ergeben. Um diesen Nachteil zu vermeiden, sind bei der Ausführungsform nach den Fig. 3 und 4 im Mischraum 23 zwei um zueinander parallele Achsen 25 umlaufende Mischorgane 24 vorgesehen, die in der gleichen Richtung umlaufen (Pfeile 27). Im Bereich der Stelle 38, wo die beiden Mischorgane 24 einander begegnen, wird das Gut vom der Schnecke 13 entfernten Mischorgan 24 zum Großteil in Richtung des Pfeiles 39 an das der Schnecke 13 benachbarte Mischorgan 24 übergeben, welches das Gut dann in Richtung des Pfeiles 40 in den vergrößerten Bereich 64 der Öffnung 32 drückt. Die beiden Mischorgane 24 ergeben eine besonders intensive Durchwirbelung bzw. Mischung des bearbeiteten Gutes im Mischraum 23, was wesentlich zur Homogenisierung der Temperatur des behandelten Gutes im Mischraum 23 beiträgt.

Wie Fig. 5 zeigt, kann der Boden 28 des Mischraumes 23 horizontal verlaufen, also parallel zur Achse 9 des Rotors 6 und der mit ihm drehschlüssig verbundenen Schnecke 13. Die Achsen 25 der Mischorgane 24 stehen dann normal auf die Achse 9. Diese Bauweise hat den Vorteil, dass das der Schnecke 13 benachbarte umlaufende Mischorgan 24 das zerkleinerte und durchgemischte Gut nicht nur gegen die dem Mischraum 23 zugewandte Oberflächenpartie des Rotors 6 schleudert, sondern auch in den Spalt 22 hinein, also entgegen der Umlaufrichtung des Rotors 6, sodass das Material zur Schnecke 13 ausweichen muss. Dieser Effekt kann auch ausgenützt werden, wenn der Boden 28 tiefer liegt als die Unterkante des Rotors 6. Gegebenenfalls kann von der durch die Unterbrechung der Rippe 31 gebildeten Vergrößerung 64 der Öffnung 32 weg eine Schrägfläche nach Art einer Rampe 63 nach oben zum Spalt 22 führen.

Wie Fig. 6 zeigt, muss der Boden 28 jedoch nicht horizontal angeordnet sein, sondern kann auch geneigt verlaufen, u.zw. ansteigend zur Schnecke 13 hin. Auch in diesem Fall könnten die Achsen 25 der umlaufenden Mischorgane 24 normal verlaufen zur Rotorachse 9. Um die Aufwirbelung der Gutteilchen vom Boden 28 des Mischraumes 23 zu begünstigen, ist es jedoch vorteilhafter, die Achsen 25 normal zum Boden 28 des Mischraumes 23 anzuordnen. Eine solche Anordnung hat den Vorteil, dass die Umlaufbahn des der Schnecke 13 benachbarten Mischorganes 24 sehr nahe heranreicht an das konisch verbreiterte Einzugsende der Schnecke 13, sodass das zerkleinerte und durchgemischte Gut wirksam in die Einzugsöffnung 34 des Gehäuses 14 der Schnecke 13 gedrückt wird.

Bei der Ausführungsform nach den Fig. 7 und 8 reicht der Mischraum 23 über das der Schnecke 13 benachbarte Stimende 12 des Rotors 6 hinaus. Dies ergibt die Möglichkeit, die Schnecke 13 von der Seite her über eine Einzugsöffnung 41 des Schneckengehäuses 14 zu befüllen, in welche Öffnung 41 das der Schnecke 13 benachbarte Mischorgan 24 das durchgemischte Gut in Richtung des Pfeiles 42 hineinfördert. Bei dieser Bauweise, welche sehr kostengünstig ist, kann sich die Rippe 31 über die gesamte Länge des Rotors 6 erstrecken. Um das Aufnahmevermögen der Schnecke 13 im Bereich der Einzugsöffnung 41 zu verbessern, ist der Kemdurchmesser der Schnecke 13 im Bereich der Einzugsöffnung 41 geringer als im restlichen Schneckenbereich, zweckmäßig vergrößert sich der Kerndurchmesser der Schnecke 13 kontinuierlich in deren Förderrichtung, also von der Einzugsöffnung 41 weg. Für eine wirksame Befüllung der Schnecke 13 ist es hiebei zweckmäßig, wenn das der Öffnung 41 benachbarte Mischorgan 24 zumindest annähernd auf der Höhe der Öffnung 41 umläuft. Wenn dies wegen des Durchmesserverhältnisses von Rotor 6 und Schnecke 13 Schwierigkeiten bereitet, so können diese Schwierigkeiten dadurch überwunden werden, dass der Boden 28 des Mischraumes 23 zur Öffnung 41 hin ansteigt, etwa so, wie dies in Fig. 6 dargestellt ist.

Bei den bisher dargestellten Ausführungsformen waren die Achsen 25 der Mischorgane 24 zumindest annähernd normal auf die Achse des Rotors 6 gerichtet. Es ist jedoch, wie die Fig. 9 bis 11 zeigen, auch eine grundsätzlich andere Anordnung der Mischorgane 24 bzw. deren Drehachsen 25 möglich. Der Mischraum erstreckt sich 23 über die gesamte axiale Länge des Rotors 6. In den beiden Stirnwänden 43 des Mischraumes 23 ist eine sich in Richtung der Achse 25 erstreckende Welle 44 gelagert, die mehrere in axialem Abstand voneinander angeordnete Mischorgane 24 trägt, deren jedes mehrere sternförmig angeordnete Schaufeln 45 aufweist, die zweckmäßig schräg zur Richtung der Achse 25 gestellt sind, um eine Förderrichtung auf das im Mischraum 23 durchgewirbelte Gut in Richtung zur Vergrößerung 64 der Öffnung.32 zu erzielen (Pfeil 46). Diese Erweiterung der Öffnung 32 kann in ähnlicher Weise ausgebildet sein, wie dies bei den vorhergehenden Ausführungsbeispielen beschrieben wurde, jedoch ist es besonders günstig, die in den Fig. 9 bis 11 dargestellte Ausbildung zu wählen. Hierbei ist am Unterrand der Erweiterung 64 der Öffnung 32 eine Staurippe 47 vorgesehen, welche im Anschluss an die Rippe 31 angeordnet ist, jedoch gegenüber dieser in Richtung zum Mischraum 23 versetzt ist. Dieser Staurippe 47 liegt das letzte Mischorgan 24 gegenüber, welches jedoch keine schräg gestellten Schaufeln 45, sondern achsparallel angeordnete schaufelähnliche Organe 48 aufweist, die das Material durch Fliehkraft in die den erweiterten Öffnungsbereich 64 fördern. Dort ist die Öffnung 32 auch nach oben zu vergrößert (Fig. 11), u.zw. dadurch, dass das im wesentlichen kreiszylindrische Gehäuse 49 des Mischraumes 23 im Bereich des Stimendes 12 des Rotors 6 eine Ausnehmung 50 hat, sodass also dort der Gehäusezwickel 51 entfällt. Dies hat zur Folge, dass im wesentlichen der gesamte dem Mischraum 23 zugewendete Umfangsabschnitt des Rotors 6 von den Schaufeln 48 mit gemischtem Gut versorgt wird. Dies bewirkt eine verbesserte Befüllung der Einzugsöffnung 34 der Schnecke 13.

Die Ausführungsform nach den Fig. 12 bis 14 ähnelt jener nach den Fig. 9 bis 11, jedoch streckt sich der Mischraum 23 über das der Schnecke 13 zugewendete Stimende 12 des Rotors 6 hinaus. Die so gebildete Verlängerung 52 des Mischraumgehäuses 49 hat gegenüber dem restlichen Mischraum 23 einen größeren Durchmesser und trägt mit ihrer Stirnwand 43 das Lager 53 für die Welle 44 der Mischorgane 24. Die Welle 44 läuft in Richtung des Pfeiles 54 um, sodass die schräg gestellten, in Form von Schaufeln ausgebildeten Mischorgane 24, welche Förderorgane bilden, das in den Mischraum 23 gelangte Gut in Richtung zur Verlängerung 52 des Mischraumes 23 und in den von dieser Verlängerung 52 umschlossenen Raum 55 fördern. Dort ist auf die Welle 44 eine Trägerscheibe 56 aufgesetzt, die mehrere Werkzeuge 57 trägt, deren Arbeitskanten 58 entgegen der Umlaufrichtung (Pfeil 54) der Welle 44 abgewinkelt sind. Dadurch ergibt sich beim Umlauf der Welle 44 eine spachtelartige Eindrückung des im Raum 55 befindlichen Gutes in die Einzugsöffnung 41 des Schneckengehäuses 14. In diesem Bereich kann die Schnecke so ausgebildet sein, wie dies im Zusammenhang mit Fig. 8 beschrieben wurde.

Die intensive Durchmischung des vom Rotor 6 in den Mischraum 23 eingebrachten zerkleinerten Gutes macht es möglich, diese Durchwirbelung des Gutes auch für die Einmischung eines oder mehrerer Zusatzstoffe nutzbar zu machen. Wie Fig. 1 zeigt, kann hiefür an den Mischraum 23 eine Einrichtung 59, z.B. ein Dosierwerk, eine Pumpe, ein Gebläse od.dgl., angeschlossen sein, durch welche die Zusatzstoffe über eine Leitung 60, welche die Seitenwand 29 des Mischraumes 23 durchsetzt, in den Mischraum eingebracht werden können. Die erwähnte intensive Durchmischung ergibt eine homogene Verteilung der eingebrachten Zusatzstoffe im bearbeiteten thermoplastischen Kunststoffmaterial.

Wenn es erforderlich ist, kann der Mischraum 23 durch eine Deckwand 61 abgedeckt sein. Ebenso ist es möglich, den Mischraum 23 und gegebenenfalls auch den Trichter 3 unter Vakuum zu halten, wenn luftempfindliches Gut oder luftempfindliche Zusatzstoffe verarbeitet werden sollen. Für diesen Fall müsste die Einbringung des zu behandelnden Gutes in den Trichter über eine luftdichte Schleuse erfolgen.

Wie erwähnt, fördern die im Mischraum 23 angeordneten Mischorgane 24 bzw. zusätzliche Werkzeuge 57 das im Mischraum 23 befindliche zerkleinerte Gut zur Einzugsöffnung 41 des Schneckengehäuses 14. Die Mischorgane 24 bzw. die zusätzlichen Werkzeuge 57 können daher auch zerkleinernd auf das im Mischraum 23 befindliche Gut einwirken, z.B. mittels Schneidkanten. Für diesen Fall kann man davon sprechen, dass vom Rotor 6 eine Vorzerkleinerung des behandelten Gutes erfolgt, durch die Misch- und Zerkleinerungsorgane 24 bzw. die zusätzlichen Werkzeuge 57 eine nochmalige Zerkleinerung.

Um das im Mischraum 23 behandelte Gut auf einer vorbestimmten Temperatur zu haften, können für den Mischraum 23 Heizungen und/oder Kühlvorrichtungen 62 vorgesehen sein (Fig. 2).

Diese Maßnahmen können selbstverständlich auch bei den anderen dargestellten Ausführungsformen Anwendung finden.

Die Schnecke 13 muss keine Extruderschnecke sein, wenngleich dies die häufigste Ausführungsform sein wird. Beispielsweise kann die Schnecke 13 auch eine Agglomerierschnecke zur Erzeugung agglomerierten, also nicht plastifizierten Kunststoffgutes sein, oder eine Transportschnecke, welche das zerkleinerte und gemischte Kunststoffgut der weiteren Behandlung zuführt.

## Patentansprüche

1. Vorrichtung zum Aufbereiten von thermoplastischem Kunststoffgut, insbesondere zu Recyclingzwecken, mit einem Schneidraum, in dessen Bodenbereich ein Zerkleinerer angeordnet ist, der zumindest einen um eine horizontale Achse umlaufenden Rotor aufweist, der an seinem Umfang das aufzubereitende Gut zerkleinernde Werkzeuge, insbesondere Messer, trägt, denen ortsfeste Widerlager, insbesondere Gegenmesser, zugeordnet sind, und mit zumindest einem das Kunststoffgut im Schneidraum gegen den Zerkleinerer drückenden Druckwerkzeug, insbesondere einem im Bereich des Bodens des Schneidraumes angeordneten Stopfschieber, und mit einer das im Schneidraum zerkleinerte Kunststoffgut abtransportierenden, in. einem Gehäuse gelagerten Schnecke, insbesondere einer Extruderschnecke, **dadurch gekennzeichnet, dass** der Schneidraum (2) Ober eine Öffnung (32), die sich über im Wesentlichen die gesamte axiale Länge des Zerkleinerers (5) erstreckt, mit einem Mischraum (23) in Verbindung steht, in welchen das Kunststoffgut vom Zerkleinerer (5) gelangt und in welchem zumindest ein umlaufendes Mischorgan (24) angeordnet ist, welches das Kunststoffgut zur Schnecke (13) und/oder zum der Schnecke (13) benachbarten Endabschnitt (33) des Zerkleinerers (5) fördert.

2. Vorrichtung nach Anspruch 1, **dadurch gekennzeichnet, dass** der Mischraum (23) unmittelbar an den Schneidraum (2) anschließt

3. Vorrichtung nach Anspruch 1 oder 2, **dadurch gekennzeichnet, dass** der Mischraum (23) an der dem Druckwerkzeug (15) gegenüberliegenden Seite des Zerkleinerers (5) angeordnet ist.

4. Vorrichtung nach Anspruch 1, 2 oder 3, **dadurch gekennzeichnet, dass** die Schnecke (13) koaxial zur Achse (9) des Zerkleinerers (5) angeordnet und mit diesem drehschlüssig gekoppelt ist.

5. Vorrichtung nach einem der Ansprüche 1 bis 4, **dadurch gekennzeichnet, dass** im Mischraum (23) zumindest ein Mischorgan (24) um eine vertikale oder leicht geneigte Achse (25) umläuft, wobei die Umlaufrichtung so gewählt ist, dass die Zentrifugalkraft das umlaufende Kunststoffgut an dem der Schnecke (13) benachbarten Ende des Mischraumes (23) gegen den Zerkleinerer (5) und/oder in eine zur Schnecke (13) führende Austassöffnung (64) des Mischraumes (23) drückt.

6. Vorrichtung nach einem der Ansprüche 1 bis 4, **dadurch gekennzeichnet, dass** im Mischraum (23) zumindest ein Mischorgan (24) um eine zur Achse (9) des Zerkleinerers (5) parallele oder dazu leicht geneigte Achse (25) umläuft, wobei diese Umlaufrichtung vorzugsweise der Umlaufrichtung des Rotors (6) des Zerkleinerers (5) entgegengesetzt gerichtet ist.

7. Vorrichtung nach einem der Ansprüche 1 bis 6, **dadurch gekennzeichnet, dass** der Boden (4) des Schneidraumes (2) über eine Rippe (31) in den Boden (28) des Mischraumes (23) übergeht, welche Rippe (31) vor dem der Schnecke (13) benachbarten Stirnende (12) des Rotors (6) endet.

8. Vorrichtung nach Anspruch 6 oder 7, **dadurch gekennzeichnet, dass** die Mischorgane (24) eine Förderwirkung in Richtung zum der Schnecke (13) benachbarten Ende des Mischraumes (23) haben und vorzugsweise von mehreren in axialer Richtung hintereinander angeordneten Sätzen schräggestellter Förderelemente, z.B. Schaufeln (45) gebildet sind.

9. Vorrichtung nach einem der Ansprüche 1 bis 8, **dadurch gekennzeichnet, dass** sich der Mischraum (23) über das der Schnecke (13) benachbarte Stirnende (12) des Rotors (6) hinaus erstreckt und dort mit einer Öffnung (41) des Gehäuses (14) der Schnecke (13) in Verbindung steht.

10. Vorrichtung nach Anspruch 9, **dadurch gekennzeichnet, dass** im Bereich der Öffnung (41) auf einer die Mischorgane (24) tragenden Welle (44) Werkzeuge (57) sitzen, die beim Umlauf das Kunststoffgut spachtelartig in die Öffnung (41) fördern, vorzugsweise Werkzeuge (57), deren vorlaufende Kanten (58) entgegen der Umlaufrichtung (Pfeil 54) abgewinkelt sind.

11. Vorrichtung nach einem der Ansprüche 7 bis 10, **dadurch gekennzeichnet, dass** im Bereich des Bodens (28) des Mischraumes (23) angeordnete umlaufende Mischorgane (24) im wesentlichen auf der Höhe der zur Schnecke (13) führenden Öffnung (41) des Gehäuses (14) der Schnecke (13) oder auf der Höhe einer vom Mischraum (23) zum Schneidraum (2) führenden Rampe (63) liegen.

12. Vorrichtung nach Anspruch 11, **dadurch gekennzeichnet, dass** der Boden (28) des Mischraumes (23) gegen die Öffnung (32) bzw. gegen die Rampe (63) hin ansteigt.

13. Vorrichtung nach einem der Ansprüche 4 bis 12, **dadurch gekennzeichnet. dass** der dem Rotor (6) benachbarte Abschnitt der Schnecke (13) sich gegen den Rotor (6) zu konisch verbreitert.

14. Vorrichtung nach einem der Ansprüche 1 bis 13, **dadurch gekennzeichnet, dass** der Kerndurchmesser der Schnecke (13) in Förderrichtung zunimmt.

15. Vorrichtung nach einem der Ansprüche 1 bis 14, **dadurch gekennzeichnet, dass** zumindest in jenem Bereich des Rotors (6), welcher der Schnecke (13) benachbart ist, die Messer (20) an seinem Umfang entlang Schraubenlinlen (35) und in bezug auf die Achse (9) schräg gestellt angeordnet sind.

16. Vorrichtung nach einem der Ansprüche 1 bis 15, **dadurch gekennzeichnet, dass** eine Einrichtung (62) zur Heizung und/oder Kühlung für den Mischraum (23) vorgesehen ist.

17. Vorrichtung nach einem der Ansprüche 1 bis 16, **dadurch gekennzeichnet, dass** an den Mischraum (23) eine Einrichtung (59) zur Einbringung zumindest eines Zusatzstoffes in das Kunststoffgut angeschlossen ist.

18. Vorrichtung nach einem der Ansprüche 1 bis 17, **dadurch gekennzeichnet, dass** zumindest ein Mischorgan (24) auch zertdeinemd auf das Kunststoffgut wirkt, z.B. mittels Schneidkanten.

19. Verfahren zum Aufbereiten von thermoplastischem Kunststoffgut, insbesondere zu Recyclingzwecken, wobei das Kunststoffgut gegen einen Zerkleinerer gedrückt wird, der zumindest einen an seinem Umfang mit Zerkleinerungswerkzeugen bestückten, zur Drehbewegung um seine horizontale Achse angetriebenen Rotor (6) aufweist, und durch diesen Zerkleinener in einem Schneidraum zerkleinert und in der Folge mittels einer Schnecke (13) abtransportiert wird, **dadurch gekennzeichnet, dass** das zerkleinerte Gut aus dem Schnetdraum Ober die ganze axiale Länge des Rotors in einen Mischraum (23) eingeleitet wird, in welchem das zerkleinerte Gut mittels umlaufender Mischorgane (24) gernischt und dabei homogenisiert wird und in diesem Zustand in die Schnecke eingeleitet wird.

20. Vorfahren nach Anspruch 19. **dadurch gekennzeichnet, dass** die Homogenisierung der Kunststoffgutteilchen hinslchtiich ihrer Temperatur und/oder Feuchtigkeit und/oder Größenverteilung erfolgt.

21. Verfahren nach Anspruch 19 oder 20, **dadurch gekennzeichnet, dass** das Kunststoffgut im Mischraum einer weiteren Zerkleinerung unterworfen wird.

22. Verfahren nach Anspruch 19, 20 oder 21, **dadurch gekennzeichnet, dass** die zerkleinerten Kunststoffteilchen im Mischraum auch getrocknet werden.

23. Verfahren nach Anspruch 22, **dadurch gekennzeichnet, dass** die Trocknung zusätzlich zur Energieaufbringung über die Mischorgane durch Aufbringung äußerer Energie erfolgt.

## Claims

1. Device for processing thermoplastic synthetic material, particularly for the purpose of recycling, comprising a cutting compartment having a comminuting device in its bottom region which includes at least one rotor rotating about a horizontal axis and supporting at its periphery tools, particularly cutter blades, which comminute the material to be processed, stationary thrust means, particularly counter-blades, being associated to them, the device further comprising at least one compression tool, particularly a packing slider, arranged within the bottom region of said cutting compartment, that compresses said synthetic material within said cutting compartment against said comminuting device, and screw means supported in a housing, particularly an extruder screw, which evacuates said synthetic material comminuted within said cutting compartment, **characterised in that** said cutting compartment (2) communicates through an opening (32) which extends substantially over the whole axial length of said comminuting device (5) with a mixing compartment (23) into which said synthetic material from said comminuting device (5) is fed and in which at least one rotating mixing element (24) is located that conveys said synthetic material to said screw (13) and/or to that end section (33) of said comminuting device (5) which is adjacent to said screw (13).

2. Device according to claim 1, **characterised in that** said mixing compartment (23) joins immediately to said cutting compartment (2).

3. Device according to claim 1 or 2, **characterised in that** said mixing compartment (23) is arranged at that side of said comminuting device (5) which is opposite to said compression tool (15).

4. Device according to claim 1, 2 or 3, **characterised in that** said screw (13) is coaxial with the axis (9) of said comminuting device (5) being coupled for common rotation to the latter.

5. Device according to any of claims 1 to 4, **characterised in that** at least one mixing element (24) within said mixing compartment (23) rotates about a vertical or slightly inclined axis (25), the rotational direction being chosen such that the centrifugal force presses the rotating synthetic material at that end of the mixing compartment (23), which is adjacent to said screw (13), against said comminuting device (5) and/or into a discharge opening (64) of said mixing compartment (23) which leads to said screw (13).

6. Device according to any of claims 1 to 4, **characterised in that** at least one mixing element (24) within said mixing compartment (23) rotates about an axis (25) that is parallel or slightly inclined with respect to the axis (9) of said comminuting device (5) in a direction of rotation which is preferably opposite to the direction of rotation of the rotor (6) of said comminuting device (5).

7. Device according to any of claims 1 to 6, **characterised in that** said bottom (4) of said cutting compartment (2) passes to the bottom of said mixing compartment (23) over a rib (31), said rib (31) ending before that frontal end (12) of said rotor (6) which is adjacent to said screw (13).

8. Device according to claim 6 or 7, **characterised in that** the mixing elements (24) impose a conveying effect in the direction to that end of the mixing compartment (23) which is adjacent to said screw (13), and are preferably formed by several sets of conveying elements, e.g. blades (45), inclined and arranged in series in axial direction.

9. Device according to any of claims 1 to 8, **characterised in that** said mixing compartment (23) extends beyond that frontal end (12) of said rotor (6) which is adjacent to said screw (13), while communicating there with an opening (41) of the housing (14) of said screw (13).

10. Device according to claim 9, **characterised in that** in the region of said opening (41) tools (57) are attached to a shaft (44), that supports said mixing elements (24), which during rotation convey like a spatula said synthetic material into said opening (41), the leading edges (58) of said tools (57) being preferably angled in opposite direction to the direction of rotation (arrow 54).

11. Device according to any of claims 7 to 10, **characterised in that** those rotating mixing elements (24,) which are arranged within the region of the bottom (28) of said mixing compartment (23), are situated substantially at the height of that opening (41) of the housing (14) of the screw (13) which leads to said screw (13), or at the height of a ramp (63) leading from the mixing compartment (23) to the cutting compartment (2).

12. Device according to claim 11, **characterised in that** the bottom (28) of said mixing compartment (23) ascends towards said opening (32) or towards said ramp (63).

13. Device according to any of claims 4 to 12, **characterised in that** the section of said screw (13) which is adjacent to said rotor (6) is conically widened towards said rotor (6).

14. Device according to any of claims 1 to 13, **characterised in that** the core diameter of said screw (13) is enlarging in conveying direction.

15. Device according to any of claims 1 to 14, **characterised in that** at least **in that** region of said rotor (6), which is adjacent to said screw (13), the blades (20) at its periphery are arranged along screw lines (35) and inclined with respect to the axis (9).

16. Device according to any of claims 1 to 15, **characterised in that** means (62) are provided for heating and/or cooling said mixing compartment (23).

17. Device according to any of claims 1 to 16, **characterised in that** means (59) for introducing at least one additive to said synthetic material are connected to said mixing compartment (23).

18. Device according to any of claims 1 to 17, **characterised in that** at least one mixing element (24) exerts also a comminuting action to said synthetic material, e.g. by cutting edges.

19. Method for processing thermoplastic synthetic material, particularly for the purpose of recycling, wherein said synthetic material is pressed towards a comminuting device which comprises at least one rotor (6) provided with comminuting tools at its periphery and driven to exert a rotating motion about a horizontal axis, while it is comminuted by said comminuting device within a cutting compartment, being subsequently discharged by a screw (13), **characterised in that** the comminuted material is introduced from said cutting compartment over the whole axial length of said rotor into a mixing compartment (23) wherein said comminuted material is mixed, and thus homogenised, by means of rotating mixing elements (24), and in this condition is fed into said screw.

20. Method according to claim 19, **characterised in that** homogenising of the particles of synthetic material is effected with respect to their temperature and/or humidity and/or size distribution.

21. Method according to claim 19 or 20, **characterised in that** said synthetic material in said mixing compartment is subjected to further comminution.

22. Method according to claim 19, 20 or 21, **characterised in that** the comminuted particles of synthetic material are also dried within said mixing compartment.

23. Method according to claim 22, **characterised in that** drying, in addition to energy supply by the mixing elements, is effected by supplying external energy.

## Revendications

1. Dispositif de traitement de matière synthétique thermoplastique, particulièrement pour des buts de recyclage, comprenant un compartiment de coupage, dans lequel un désintégrateur est disposé dans la zone du fond, qui comprend au moins un rotor tournant autour d'un axe horizontal, qui porte à son périphérie des outils, particulièrement des lames, désintégrant la matière à traiter, auxquels des butées stationnaires, particulièrement des contre-lames, sont associées, et comprenant au moins un outil de compression, particulièrement une coulisse de remplissage, situé dans la zone du fond du compartiment de coupage, qui presse la matière synthétique dans le compartiment de coupage contre le désintégrateur, et avec une vis, particulièrement une vis d'extrudeuse, logée dans un carter, qui décharge la matière synthétique désintégrée dans le compartiment de coupage, **caractérisé en ce que** le compartiment de coupage (2) communique à travers d'une ouverture (32), qui s'étend essentiellement en entier à travers la longueur axiale du désintégrateur (5), avec un compartiment mélangeur (23), dans lequel la matière synthétique arrive du désintégrateur (5), et dans lequel au moins un outil mélangeur (24) rotatif est disposé, qui transporte la matière synthétique à la vis (13) et/ou à cette section finale (33) du désintégrateur (5), qui se trouve en voisinage de la vis (13).

2. Dispositif selon la revendication 1, **caractérisé en ce que** le compartiment mélangeur (23) est directement joint au compartiment de coupage (2).

3. Dispositif selon la revendication 1 ou 2, **caractérisé en ce que** le compartiment mélangeur (23) est disposé à ce côté du désintégrateur (5), qui est opposé à l'outil de compression (15).

4. Dispositif selon la revendication 1, 2 ou 3, **caractérisé en ce que** la vis (13) est disposée coaxialement à l'axe (9) du désintégrateur (5) et est couplée à celui-ci à tourner en commun.

5. Dispositif selon une quelconque des revendications 1 à 4, **caractérisé en ce qu'**au moins un élément mélangeur (24) tourne autour d'un axe (25) vertical ou légèrement incliné dans le compartiment mélangeur (23), le sens de rotation étant choisi de manière, que la force centrifuge, à cette extrémité du compartiment mélangeur (23) qui est en voisinage de la vis (13), presse la matière synthétique tournante contre le désintégrateur (5) et/ou dans une ouverture de sortie (64) du compartiment mélangeur (23), qui conduit à la vis (13).

6. Dispositif selon une quelconque des revendications 1 à 4, **caractérisé en ce que** dans le compartiment mélangeur (23) au moins un élément mélangeur (24) tourne autour d'un axe (25) parallèle ou légèrement incliné à l'axe (9) du désintégrateur (5), ce sens de rotation étant préférablement opposé au sens de rotation du rotor (6) du désintégrateur (5).

7. Dispositif selon une quelconque des revendications 1 à 6, **caractérisé en ce que** le fond (4) du compartiment de coupage (2) passe au fond (28) du compartiment mélangeur (23) par une nervure (31), ladite nervure (31) se terminant devant cette extrémité frontale (12) du rotor (6), qui est en voisinage de la vis (13).

8. Dispositif selon la revendication 6 ou 7, **caractérisé en ce que** les éléments mélangeurs (24) ont un effet de transport en direction à cette extrémité du compartiment mélangeur (23), qui est voisin à la vis (13), et sont formés de préférence de plusieurs jeux d'éléments de transport inclinés, par exemple des ailettes (45), disposés en direction axiale l'un après l'autre.

9. Dispositif selon une quelconque des revendications 1 à 8, **caractérisé en ce que** le compartiment mélangeur (23) s'étend au delà de cette extrémité frontale (12) du rotor (6), qui est en voisinage de la vis (13), et y communique avec une ouverture (41) du carter (14) de la vis (13).

10. Dispositif selon la revendication 9, **caractérisé en ce que** dans la zone de l'ouverture (41) des outils (57) sont calés à un arbre (44), qui porte les éléments mélangeurs (24), qui pendant la rotation convoient la matière synthétique dans l'ouverture (41) d'une manière comme une spatule, préférablement des outils (57), dont les bords avants (58) sont pliés contre la direction de rotation (flèche 54).

11. Dispositif selon une quelconque des revendications 7 à 10, **caractérisé en ce que** des éléments mélangeur (24) tournants et disposés dans la zone du fond (28) du compartiment mélangeur (23) sont essentiellement à la hauteur de l'ouverture (41) du carter (14) de la vis (13), qui conduit à la vis (13), ou à la hauteur d'une rampe (63), qui conduit du compartiment mélangeur (23) au compartiment de coupage (2).

12. Dispositif selon la revendication 11, **caractérisé en ce que** le fond (28) du compartiment mélangeur (23) s'élève vers l'ouverture (32) ou vers la rampe (63).

13. Dispositif selon une quelconque des revendications 4 à 12, **caractérisé en ce que** cette section de la vis (13), qui est en voisinage du rotor (6), s'élargit de façon conique vers le rotor (6).

14. Dispositif selon une quelconque des revendications 1 à 13, **caractérisé en ce que** le diamètre du noyau de la vis (13) s'agrandit en direction de transport.

15. Dispositif selon une quelconque des revendications 1 à 14, **caractérisé en ce qu'**au moins dans cette zone du rotor (6), qui est en voisinage de la vis (13), les lames (20) à sa périphérie sont disposées le long des hélices (35) et sont inclinées par rapport à l'axe (9).

16. Dispositif selon une quelconque des revendications 1 à 15, **caractérisé en ce que** des moyens (62) de chauffage et/ou de refroidissement du compartiment mélanger (23) sont prévus.

17. Dispositif selon une quelconque des revendications 1 à 16, **caractérisé en ce que** des moyens (59) sont reliés au compartiment mélangeur (23) pour introduire au moins un additif à la matière synthétique.

18. Dispositif selon une quelconque des revendications 1 à 17, **caractérisé en ce qu'**au moins un élément mélangeur (24) agit d'une manière désintégrante à la matière synthétique, par exemple au moyens des arrêtes de coupage.

19. Procédé de traitement de matière synthétique thermoplastique, particulièrement pour des buts de recyclage, dans lequel la matière synthétique est pressée contre un désintégrateur, qui comprend au moins un rotor (6) prévus à sa périphérie des outils désintégrateurs et étant entraîné en rotation autour d'un axe horizontal, est désintégrée par ce désintégrateur dans un compartiment de coupage et subséquemment est déchargée par une vis (13), **caractérisé en ce que** la matière désintégrée du compartiment de coupage est introduite à travers la longueur axiale entière du rotor dans un compartiment mélangeur (23), dans lequel la matière désintégrée est mélanger au moyens des éléments mélangeurs (24), ainsi étant homogénéisée, et dans cette condition étant introduite dans la vis.

20. Procédé selon la revendication 19, **caractérisé en ce que** la homogénéisation des particules de matière synthétique est effectuée à l'égard de la température et/ou de la humidité et/ou de la distribution de la dimension.

21. Procédé selon la revendication 19 ou 20, **caractérisé en ce que** la matière synthétique dans le compartiment mélangeur est soumis d'une désintégration ultérieure.

22. Procédé selon la revendication 19, 20 ou 21, **caractérisé en ce que** les particules désintégrés de la matière synthétique sont aussi séchés dans le compartiment mélangeur.

23. Procédé selon la revendication 22, **caractérisé en ce que** le séchage, additionellement à l'apport d'énergie par les éléments mélangeurs, est effectué par alimentation en énergie extérieure.
